# EUROPEAN PATENT APPLICATION

(11) **EP 4 607 156 A1**
(43) Date of publication of application: **27.08.2025**
(21) Application number: 25159226.7
(22) Date of filing: 20.02.2025
(51) Int. Cl.: G01F 1/66

(54) **A FLUID FLOW METER**

(30) Priority: 26.02.2024 DE 102024105280
(71) Applicant: Landis+Gyr GmbH, 90459 Nürnberg (DE)
(72) Inventor: WAGNER, Christian, 90459 Nürnberg (DE); WEGH, Niels, 90459 Nürnberg (DE); OLBERS, Andreas, 90459 Nürnberg (DE)
(74) Representative: Marks & Clerk LLP

(57) **Abstract**

An ultrasonic flow meter comprising a flow pipe for a fluid whose flow rate is to be determined, a flow-obstructing element provided inside the flow pipe and partially obstructing a flow of the fluid through the flow pipe, a temperature sensor protruding into the flow pipe and arranged to measure a temperature of the fluid, the temperature sensor being positioned downstream to the flow-obstructing element, and a flow-directing element provided between the flow-obstructing element and the temperature sensor. The flow-directing element is arranged to reduce recirculation of the fluid.

## Description

### Technical Field

Embodiments described herein relate to ultrasonic flow meters. As used herein, the term "flow meter" is intended to encompass flow meters for measuring flow of a fluid, such as water meters, or thermal energy meters (e.g. heat meters or cooling meters).

### Background

It is known for fluid flow meters (e.g. for use in water meters, heat meters, or cooling meters) to use ultrasound measuring technology to measure the flow rate of the fluid. In such a device, a pair of transducers exchanges pulse-like ultrasound signals. The difference of the transit times of the ultrasound signals travelling in the direction of flow and against the direction of flow is processed to establish the flow rate of the fluid. The transducers can be arranged in a face-to-face arrangement, or one or more reflectors can be mounted in the fluid stream to guide the ultrasound signals along a particular path between the transducers.

It is further known for such fluid flow meters to additionally include a temperature sensor for determining the temperature of the fluid. For example, the readings of the temperature sensor can be used to determine a temperature difference between fluid in a supply path and in a return path (e.g. for use in energy meters such as heat or cooling meters). The temperature sensors are typically mounted so as to extend into the fluid stream.

Thus, both the ultrasound reflectors (or the transducers in case of a face-to-face arrangement) and the temperature sensors typically extend into the fluid stream and impede the flow of the fluid. This causes undesirable effects such as pressure drops and the like. Thus there is a continued need to provide flow meters with improved designs.

### Summary

Embodiments aim to provide new and useful flow meters. Embodiments reduce, for example, measurement noise/distortions that conventional flow meter exhibit because of vortex formation in the space between a flow-obstructing element (e.g. an ultrasound transducer or an ultrasound reflector) and a temperature sensor. Further, embodiments can reduce a pressure drop between the flow-obstructing element and the temperature sensor and result in a more homogenous velocity distribution (upstream and) downstream of the temperature sensor. Embodiments achieve this by providing a flow-directing element between the flow-obstructing element (e.g. the last (i.e. the most downstream) ultrasound transducer/reflector) and the temperature sensor that is shaped to prevent recirculation of the fluid.

According to a first aspect of the invention there is provided an ultrasonic flow meter. The ultrasonic flow meter comprises a flow pipe for a fluid whose flow rate is to be determined, a flow-obstructing element provided inside the flow pipe and partially obstructing a flow of the fluid through the flow pipe, a temperature sensor protruding into the flow pipe and arranged to measure a temperature of the fluid, the temperature sensor being positioned downstream to the flow-obstructing element, and a flow-directing element provided between the flow-obstructing element and the temperature sensor. The flow-directing element is arranged to reduce recirculation of the fluid (e.g. a turbulent fluid recirculation zone between the flow-obstructing element and the temperature sensor).

In an embodiment, the flow-directing element may be positioned immediately upstream of the temperature sensor to guide an oncoming fluid flow around an upstream facing surface of the temperature sensor.

In an embodiment, the flow-obstructing element may be a downstream ultrasound transducer, and the ultrasonic flow meter may further comprise an upstream ultrasound transducer. The ultrasound transducers may be arranged in a face-to-face arrangement for transmitting ultrasonic signals along a measuring section of the flow pipe. It is to be understood that the term "face-to-face arrangement" of the ultrasound transducers refers to ultrasound transducers that face each other and are arranged so that the ultrasonic signals are transmitted along a straight path which is angled with respect to the flow direction (i.e. neither parallel nor orthogonal to the flow direction).

Alternatively, the ultrasonic flow meter may further comprise a pair of ultrasound transducers for transmitting ultrasonic signals along a measuring section of the flow pipe, and the flow-obstructing element may be an ultrasound reflector arranged to guide the ultrasonic signals.

In an embodiment, the flow-directing element may extend, along a longitudinal direction of the flow pipe, from the reflector towards the temperature sensor (e.g. to be in contact with the temperature sensor).

In an embodiment, the flow-directing element may be arranged to hold the reflector.

In an embodiment, the ultrasonic flow meter may further comprise one or more gripper arms extending from a housing of the flow meter and arranged to hold the reflector inside the flow pipe. The flow-directing element may be provided as a separate component that is securable to the one or more gripper arms and/or the ultrasound reflector.

In an embodiment, a distal end of the temperature sensor may extend into the flow pipe, and the flow-directing element may comprise a downstream portion that extends from an inner wall of the flow pipe along a radial direction of the flow pipe to at least a radial distance from a portion of the wall of the flow pipe through which the temperature sensor protrudes that corresponds to the radial distance by which the distal end of the temperature sensor extends into the flow pipe from the portion of the wall.

In an embodiment, the flow-directing element may be provided as an insert to the flow pipe. The insert may be securable within the flow pipe. Alternatively, the ultrasonic flow meter may further comprise an insert that is securable within the flow pipe, and the flow-directing element may be provided as a separate component that is securable to the insert. In either case, the insert (and the flow-directing element) may be made from a plastic material (e.g. formed by injection moulding).

### Brief Description of the Drawings

Preferred embodiments of the present invention will now be described, by way of example only, with reference to the accompanying Figures, in which:
Figures 1A and 1B are cross-sectional side and plan views of a portion of a fluid flow meter according to an embodiment;
Figures 2A and 2B are cross-sectional side and plan views of a portion of a fluid flow meter according to another embodiment, and
Figures 3A and 3B are cross-sectional side and plan views of a portion of a fluid flow meter according to a further embodiment.

In the Figures, like features are denoted with like references numerals.

### Detailed Description

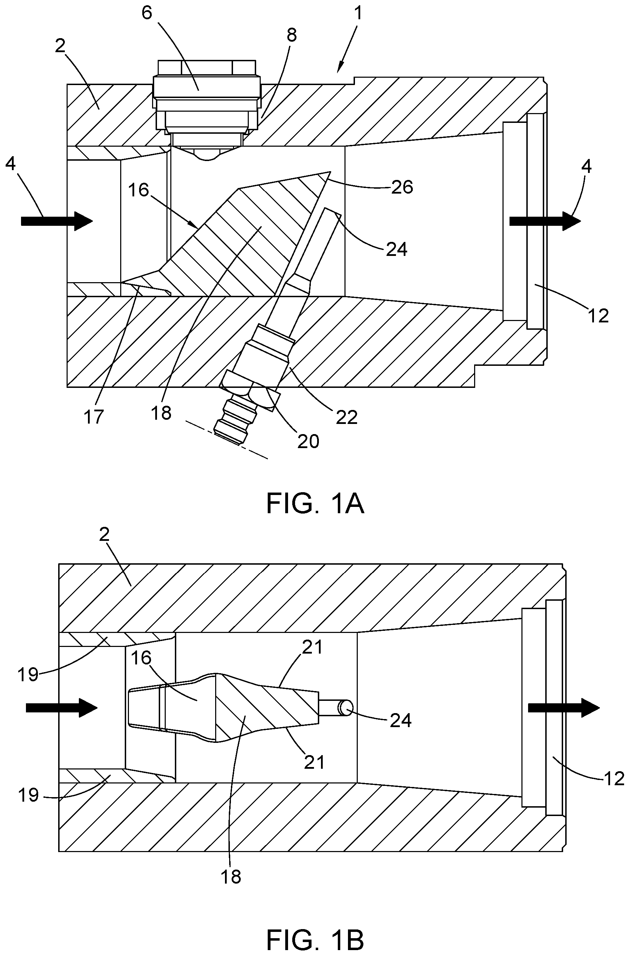

With a reference to Figure 1A and 1B, a fluid flow meter 1 is described. In general, the fluid flow meter 1 comprises means to determine the flow rate and the temperature of a fluid flowing through the flow meter 1. The fluid may be a liquid. As an example, the fluid flow meter 1 may be used as a water meter, a heat meter, or a cooling meter in domestic or industrial systems.

The flow meter 1 comprises a flow pipe 2 which is connectable to an external water system. In use, a fluid flows from an inlet of the flow pipe 2 (not shown in Figures 1A and 1B) to an outlet 12 of the flow pipe 2 (the arrows 4 indicate the flow direction). The inlet and outlet 12 of the flow pipe 2 are intended to be fitted to a pipe system through which the to-be-detected fluid flows.

The flow meter 1 uses known ultrasound measuring technology to measure the flow rate of the fluid in the flow pipe 2 based on a transit time (or "time of flight") difference of oppositely propagating sound waves (e.g. ultrasonic signals). To this end, the flow meter 1 further comprises a pair of (ultrasonic) transducers which are capable of both emitting ultrasonic signals and detecting received ultrasonic signals. More specifically, the flow meter 1 comprises an "upstream transducer" and a "downstream transducer 6" (only downstream transducer 6 is shown in Figures 1A and 1B, the upstream transducer is provided further upstream). The transducers can be mounted in corresponding recesses of the flow pipe 2 (e.g. downstream transducers 6 is mounted in recess 8).

The flow meter 1 implements a "U-shaped" propagation path of the ultrasonic signals. To this end, the flow meter 1 further comprises two reflecting elements (e.g. metal mirrors) for guiding (i.e. reflecting) the ultrasonic signals. The two reflecting elements are provided inside the flow pipe 2 (so that the reflecting surfaces of the reflecting elements are angled by approximately 45° relative to the central axis of the flow pipe 2). Thus, the ultrasonic signals (that are exchanged between the two transducers of the flow meter 1) do not travel in a straight line from one transducer to the other transducer, but are guided by the two reflecting elements (referred to as "upstream reflector" and "downstream reflector") along the U-shaped path within the flow pipe 2 (only downstream reflector 16 is shown in Figures 1A and 1B; the upstream reflector is provided further upstream).

In use, the downstream transducer 6 emits ultrasonic signals (perpendicular to the direction of flow) towards the downstream reflector 16. The downstream reflector 16 reflects the signals so that these signals propagate substantially parallel to the streaming fluid. Further upstream (not shown in Figures 1 and 1B), the upstream reflector reflects the signals towards the upstream transducer (i.e. completing the U-shaped path). Similarly, ultrasonic signals emitted by the upstream transducer propagate along the same path to the downstream transducer 6. The region of the flow pipe 2 in which ultrasonic signals are propagate substantially parallel to the streaming fluid may be referred to as the "measurement section" of the flow meter 1. It is to be understood that, instead of the U-shaped path described above, other embodiments may comprise reflectors arranged to realise different known propagation geometries, such a V-shaped, a W-shaped, a Z-shaped or a helical path.

The upstream reflector and the downstream reflector are supported (i.e. held in the desired position) by corresponding support structures. In general, these support structures can be provided in any suitable manner. As an example, the support structures may be integral to the flow pipe 2. As another example, the support structures may be provided on an insert that can be inserted into the flow pipe 2. As a further example, the support structure may extend from a housing of the flow meter 1 (not shown in Figures 1A and 1B) into the flow pipe 2.

The flow meter 1 further comprises a (generally tubular shaped) insert 17. The insert 17 is typically formed so that (when installed in the flow pipe 2) an outer surface of the insert is in direct contact with an inner surface of the flow pipe 2 and that an inner wall of the insert 17 defines a flow passage for the fluid. The insert 17 comprises an arrangement that allows securing the insert 17 inside flow pipe 2 (i.e. securing the insert 17 to the flow pipe 2). Further, the insert 17 comprises the support structures for holding the upstream and downstream reflectors. In particular, the insert 17 comprises a reflector tower 18 that holds the downstream reflector 16. The reflector tower 18 extends from an inner wall of the insert 17 and holds the downstream reflector 16 so that the ultrasonic signals emitted by the downstream transducer 6 are reflected to propagate along (or close to) the central axis of the flow pipe 2. The reflector tower 18 is typically integral with the insert 17. The insert 17 further comprises a narrow section 19 in which the flow passage has a reduced diameter. The narrow section 19 is provided within the "measurement section", i.e. between the upstream and downstream reflectors.

The flow meter 1 further comprises a (conventional) temperature sensor 20 for measuring the temperature of the fluid flowing through the flow pipe 2. The temperature sensor 20 is attached to a flange 22 of the flow pipe 2. The temperature sensor 20 extends into the flow pipe 2 so that a distal end 24 of the temperature sensor 20 terminates close to the central axis of the flow pipe 2. In the embodiment of Figures 1A and 1B, the temperature sensor 20 is angled with respect to the central flow axis of the flow pipe 2. In other embodiments, the temperature sensor 20 extends substantially perpendicular into the flow pipe 2.

As in conventional flow meters, the temperature sensor 20 is located downstream to the "measurement section" of the flow meter 1, i.e. downstream to the "last" or most downstream reflector (e.g. reflector 16 in the embodiment of Figures 1A and 1B). The inventors have found (inter alia by performing computational simulations of the flow within flow meters) that, in conventional flow meters, an undesirable wake or recirculation zone is formed between the last reflector and the temperature sensor. Within this recirculation zone, the flow of the fluid is disturbed, e.g. by the formation of circulating vortexes and other turbulent flow effects. More specifically, this recirculation zone comprises a low pressure area which sucks fluid back into this area from the remaining flow with the result of creating circulating vortices (resulting in an increased drag). This has several undesirable effects. As one example, flow distortions can effectively be "pushed back" into the measurement section (e.g. along the sidewalls of the flow pipe 2). This disturbs the transit times measurements of the ultrasonic signals and thus disturbs the determined flow rate (e.g. by noise or bias). As another example, the recirculation zone results in an undesirable pressure drop (which needs to be compensated by increased inlet pressure). As yet another example, the recirculation zone disturbs the cross-sectional velocity distribution/profile of the streaming fluid resulting in an inhomogeneous velocity distribution further downstream. This is particularly problematic in cases where multiple meters are arranged in series since the inhomogeneous velocity distribution leads to measurement distortions at subsequent (i.e. downstream) meters.

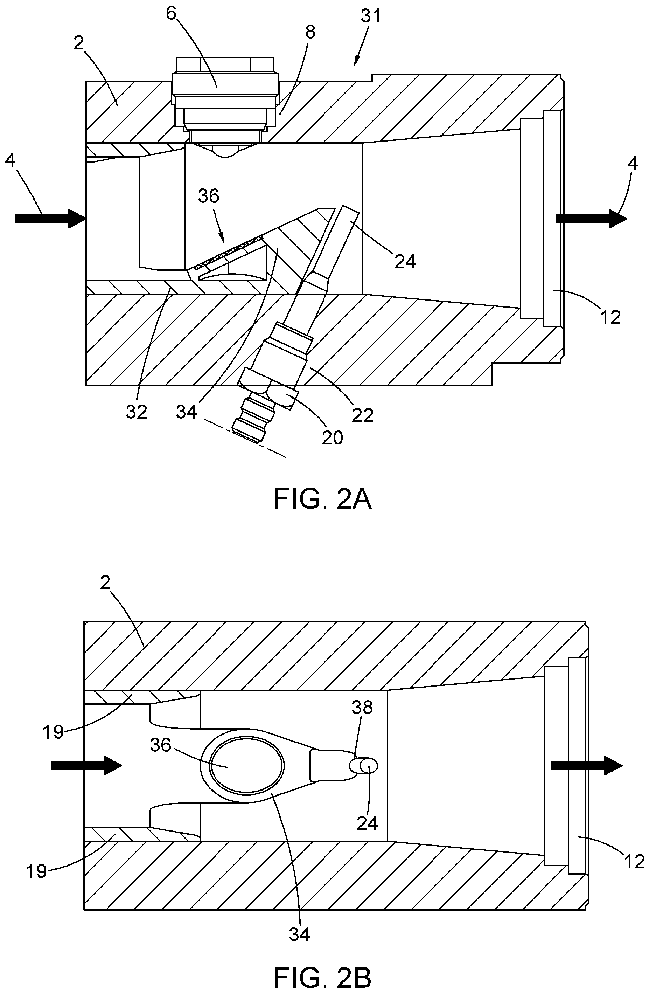

The inventors have further found that the formation of the aforementioned recirculation zone can be prevented (or at least sufficiently reduced) by providing an appropriately shaped "flow-directing element" between the last reflector and the temperature sensor. In broad terms, this may be achieved by forming the flow-directing element so that the last reflector and the temperature sensor collectively form a single obstruction for the fluid (instead of two spaced apart obstructions as in conventional flow meters). In general, the flow-directing element may have a fin-like shape (around which the fluid can flow) extending from an inner wall of the flow pipe into the fluid stream. In particular, the flow-directing element may extend, along the longitudinal direction of the flow pipe, from the reflector towards the temperature sensor. More specifically, the flow-directing element may comprise a continuous (fin-like) body with an upstream portion that terminates close to the last reflector (i.e. without leaving any substantial gap between the body and the last reflector) (as described below with reference to the embodiments of Figures 1A, 1B, 2A and 2B, the flow-directing element may hold the last reflector) and a downstream portion that terminates close to the temperature sensor (i.e. without leaving any substantial gap between the body and the temperature sensor; in other words any gap between the body and the temperature sensor may be small enough so that the last reflector, the flow-directing element and the temperature sensor still collectively form the aforementioned "single obstruction" for the fluid). In plan view, the flow-directing element typically comprises a tapered portion that is narrower at the downstream portion (because the transversal extent of the reflector is typically larger than the transversal extent of the reflector of the temperature sensor). Along the radial direction of the flow pipe, the downstream portion of the flow-directing element may extend from the portion of the inner wall of the flow pipe through which the temperature sensor protrudes to at least the radial distance by which the distal end of the temperature sensor extends into the flow pipe from this portion of the wall (i.e. the radial extent of the downstream portion of the flow-directing element may be so that the oncoming flow is guided around the temperature sensor along its entire radial extent).

The flow-directing element may be formed so that the (downstream) temperature sensor lies in the "flow shadow" of the flow-directing element, i.e. the temperature sensor may be positioned immediately downstream of the flow-directing element so that an oncoming fluid flowing around the flow-directing element is guided to flow around the temperature sensor rather than being obstructed by an upstream facing surface of the temperature. In other words, the flow-directing element may be positioned immediately upstream of the temperature sensor and may be shaped to guide the fluid stream around (the upstream facing surface of) the temperature sensor.

In the embodiment of Figures 1A and 1B, the flow-directing element is integral to the reflector tower 18. In other words, the reflector tower 18 is arranged to support the reflector 16 and is dimensioned to reduce (turbulent) recirculation of the fluid between the downstream reflector 16 and the temperature sensor 20. As shown in Figures 1A and 1B, along the longitudinal or axial direction of the flow pipe 2, the reflector tower 18 extends from the reflector 16 up to the temperature sensor 20. Sidewalls 21 of the reflector tower 18 have a generally streamlined shape to reduce friction with the fluid (best shown in the plan view of Figure 1B). The reflector tower 18 extends close to the temperature sensor 20 but is not in direct contact with the temperature sensor 20 (thus the reflector tower 18 does not block the temperature sensor 20 from being in full contact with the fluid). In general, the reflector tower 18 may extend sufficiently close to the temperature sensor 20 so that the fluid effectively experiences one continuous obstruction collectively formed by the reflector 16, the reflector tower 18 and the temperature sensor 20.

Conventional fluid dynamics simulations may be performed to simulate the flow of the fluid through a particular candidate design of the proposed flow meter (i.e. taking into account application specific design details of the flow meter such as the type of fluid, the pressure at the inlet, the dimensions of the components of the flow meter and the like). These simulations may be used to determine whether the fluid flowing through the candidate design effectively experiences one continuous obstruction collectively formed by the reflector, the reflector tower and the temperature sensor. For example, a flow distortion parameter (specifying a flow distortion between the last reflector and the temperature sensor) may be determined from the simulations, and the fluid flowing through the candidate design may be determined to effectively experiencing one continuous obstruction collectively formed by the reflector, the reflector tower and the temperature sensor, in response to determining that the flow distortion parameter is below a predefined threshold value. Further, conventional fluid dynamics simulations may also be used to determine design parameters for implementing the proposed flow meter for specific applications. For example, such simulations may be used to determine an upper limit for the distance between the reflector tower 18 and the temperature sensor 20 below which the fluid effectively experiences one continuous obstruction collectively formed by the reflector, the reflector tower and the temperature sensor.

In an embodiment, the reflector tower may be in contact with the temperature sensor (it is to be understood that in this case thermal insulation between the reflector tower and the temperature sensor may be provided). In another embodiment, the reflector tower may extend further to partially surround the temperature sensor.

An upstream portion of the reflector tower 18 extends from an inner wall of the insert 17 to (at least) the reflector 16, and a downstream portion extends from the inner wall of the insert 17 to (at least) the distal end 24 of the temperature sensor 20. In the embodiment of Figures 1A and 1B, the downstream portion of the reflector tower 18 extends slightly beyond the distal end 24 of the temperature sensor 20. Further, a surface 26 of the downstream end of the reflector tower 18 (i.e. surface 26 is the surface of the reflector tower 18 that faces the temperature sensor 20) is angled with respect to the central axis of the flow pipe 2 to be parallel to the angled temperature sensor 20. Such a design allows a uniform spacing between the reflector tower 18 and the temperature sensor 20.

The flow pipe 2 and the insert 17 can be made from any suitable material. For example, the flow pipe 2 can be a brass pipe. The insert can be made from a plastic material (e.g. by injection moulding or additive manufacturing).

Figures 2A and 2B show a variation on the flow meter of Figure 1. The flow meter 31 of Figures 2A and 2B uses a pair of transducers to measure the flow rate of the fluid and a temperature sensor 20 to measure the temperature of the fluid as described with reference to Figures 1A and 1B.

Unlike the embodiment of Figures 1A and 1B, the flow meter 31 implements a "W-shaped" propagation path of the ultrasonic signals. To this end, the flow meter 31 comprises three reflectors within the flow pipe 2 (only the most downstream reflector 36 is shown in Figures 2A and 2B; the other two reflectors are further upstream). Accordingly, the downstream reflector 36 is mounted so that its reflecting surface is angled by approximately 22.5° relative to the central axis of the flow pipe 2 (it is to be understood that in other embodiments the angle of the reflecting surface can be different, e.g. selected to take into account the distances between the reflectors).

The flow meter 31 comprises a (generally tubular shaped) insert 32 (similar to insert 17 described above). The insert 32 comprises support structures for holding the three reflectors. In particular, the insert 32 comprises a reflector tower 34 that holds the downstream reflector 36 and is dimensioned to reduce (turbulent) recirculation of the fluid between the downstream reflector 36 and the temperature sensor 20. As shown in Figures 2A and 2B, along the longitudinal direction of the flow pipe 2, the reflector tower 34 extends from the reflector 36 up to the temperature sensor 20. The reflector tower 34 extends close to the temperature sensor 20 but is not in direct contact with the temperature sensor 20. The reflector tower 34 comprises a curved surface 38 facing the temperature sensor 20. The curvature of the curved surface 38 is matches (or is similar to) the cylindrical shape of the portion of the temperature sensor that extends into flow pipe 2. Advantageously, the provision of the curved surface 20 reduces the gap between the reflector tower 34 and the temperature sensor 20.

An upstream portion of the reflector tower 34 extends from an inner wall of the insert 32 to the reflector 36, and a downstream portion extends from the inner wall of the insert 32 to approximately the same height as the distal end 24 of the temperature sensor 20.

Whilst in the embodiments described with reference to Figures 1A to 2B, the flow-directing element is described as an integral part of the insert, it is to be understood that, in other embodiments, the flow-directing element may be a separate component that is attachable to the insert.

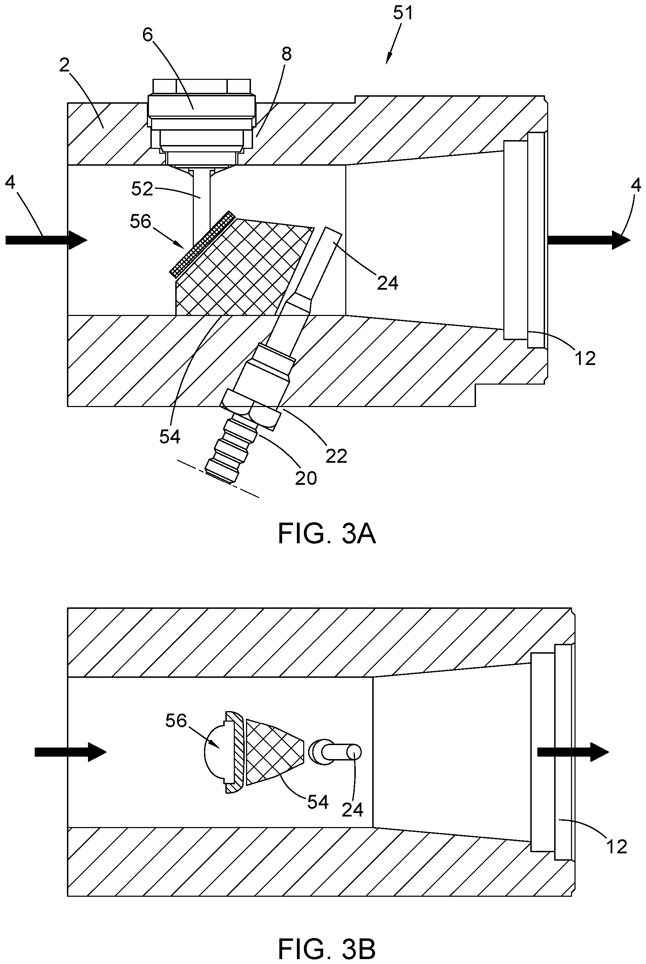

Figures 3A and 3B show a further variation on the flow meter of Figure 1. The flow meter 51 of Figures 3A and 3B uses a pair of transducers to measure the flow rate of the fluid and a temperature sensor 20 to measure the temperature of the fluid as described with reference to Figures 1A and 1B. Like the embodiment of Figures 1A and 1B, the flow meter 51 implements a "U-shaped" propagation path of the ultrasonic signals.

Unlike the flow meters 1 and 31 described above, the flow meter 51 does not use an insert to provide the support structures for the reflectors. Instead, flow meter 51 uses suspension arms which extend from a housing of the flow meter (not shown in Figures 3A and 3B) to hold the reflector inside the flow pipe 2. More specifically, flow meter 51 comprises suspension arm 52 which holds the downstream reflector 56 inside the flow pipe 2.

The flow meter 51 comprises a flow-directing element 54 that is arranged (i.e. dimensioned and positioned) to reduce (turbulent) recirculation of the fluid between the downstream reflector 56 and the temperature sensor 20. Similar to reflector towers described above, the flow-directing element 54 is formed so that the temperature sensor 20 lies at least partially with the flow shadow of the flow-directing element 54. In general, the flow-directing element 54 can be formed as an integral part of the flow pipe 2 or can be formed as a separate (plastic) component that is attachable to i) the flow pipe 2 or ii) to the suspension arm 52 and/or the reflector.

Along the longitudinal direction of the flow pipe 2, the flow-directing element 54 extends from the reflector 56 up to the temperature sensor 20. As shown in Figure 3A, the surface of the flow-directing element 54 that faces the reflector 56 is angled to match the angle of the reflector 56. Thus, a substantial gap between the reflector 56 and the flow-directing element 54 can be avoided. Similarly, the surface of the flow-directing element 54 that faces the temperature sensor 20 is angled to match the angle of the temperature sensor 20.

The flow meters described with respect to accompanying figures provide a simple and elegant solution to the problems associated with fluid recirculation between the most downstream ultrasound reflector and the temperature sensor. Whilst certain embodiments have been described, these embodiments have been presented by way of example only, and are not intended to limit the scope of the inventions. For example, while the embodiments described with reference to Figures 1A to 3B comprise ultrasound reflectors to guide the ultrasound signals, it is to be understood that, in other embodiments, the ultrasonic flow meter may comprise ultrasound transducers arranged in a face-to-face arrangement (i.e. without ultrasound transducers to guide the ultrasound signals). In these embodiments, the ultrasound transducers may extend into the fluid stream and may partially obstruct the flow through the flow pipe. Further in these embodiments, the flow-directing element may be provided between the most downstream ultrasound transducer and the temperature sensor so that the flow-directing element reduces recirculation of the fluid.

While certain arrangements have been described, they have been presented by way of example only, and are not intended to limit the scope of protection. The inventive concepts described herein may be implemented in a variety of other arrangements. In addition, various additions, omissions, substitutions and changes may be made to the arrangements described herein without departing from the scope of the invention as defined by the following claims.

## Claims

1. An ultrasonic flow meter comprising:
a flow pipe for a fluid whose flow rate is to be determined;
a flow-obstructing element provided inside the flow pipe and partially obstructing a flow of the fluid through the flow pipe;
a temperature sensor protruding into the flow pipe and arranged to measure a temperature of the fluid, the temperature sensor being positioned downstream to the flow-obstructing element, and
a flow-directing element provided between the flow-obstructing element and the temperature sensor,
wherein the flow-directing element is arranged to reduce recirculation of the fluid.

2. The ultrasonic flow meter of claim 1, wherein the flow-directing element is positioned immediately upstream of the temperature sensor to guide an oncoming fluid flow around an upstream facing surface of the temperature sensor.

3. The ultrasonic flow meter of claim 1 or 2, wherein the flow-obstructing element is a downstream ultrasound transducer, and the ultrasonic flow meter further comprises an upstream ultrasound transducer, the ultrasound transducers arranged in a face-to-face arrangement for transmitting ultrasonic signals along a measuring section of the flow pipe.

4. The ultrasonic flow meter of claim 1 or 2 further comprising a pair of ultrasound transducers for transmitting ultrasonic signals along a measuring section of the flow pipe, and wherein the flow-obstructing element is an ultrasound reflector arranged to guide the ultrasonic signals.

5. The ultrasonic flow meter of claim 4, wherein the flow-directing element extends, along a longitudinal direction of the flow pipe, from the ultrasound reflector towards the temperature sensor.

6. The ultrasonic flow meter of claim 5, wherein the flow-directing element extends, along the longitudinal direction of flow pipe, from the ultrasound reflector to the temperature sensor to be in contact with the temperature sensor.

7. The ultrasonic flow meter of any one of claims 4 to 6, wherein the flow-directing element is arranged to hold the ultrasound reflector.

8. The ultrasonic flow meter of any one of claims 4 to 7 further comprising one or more gripper arms extending from a housing of the flow meter and arranged to hold the ultrasound reflector inside the flow pipe.

9. The ultrasonic flow meter of claim 8, wherein the flow-directing element is provided as a separate component that is securable to the one or more gripper arms and/or the ultrasound reflector.

10. The ultrasonic flow meter of any preceding claim, wherein a distal end of the temperature sensor extends into the flow pipe, and the flow-directing element comprises a downstream portion that extends from an inner wall of the flow pipe along a radial direction of the flow pipe to at least a radial distance from a portion of the wall of the flow pipe through which the temperature sensor protrudes that corresponds to the radial distance by which the distal end of the temperature sensor extends into the flow pipe from the portion of the wall.

11. The ultrasonic flow meter of any preceding claim, wherein the flow-directing element is provided as an insert to the flow pipe, the insert being securable within the flow pipe.

12. The ultrasonic flow meter of any one of claims 1 to 10 further comprising an insert securable within the flow pipe, and wherein the flow-directing element is provided as a separate component that is securable to the insert.

13. The ultrasonic flow meter of claim 11 or 12, wherein the insert is made from a plastic material.

14. The ultrasonic flow meter of claim 12 or 13, wherein insert is formed by injection moulding.

15. The ultrasonic flow meter of any preceding claim, wherein the flow-directing element is shaped to guide the flow of the fluid around an upstream facing surface of the temperature sensor along the entire radial extent of the temperature sensor in the flow pipe to reduce recirculation of the fluid.
